# EUROPÄISCHE PATENTSCHRIFT

(11) **EP 1 936 859 B1**
(45) Veröffentlichungstag und Bekanntmachung des Hinweises auf die Patenterteilung: **03.10.2012**
(21) Anmeldenummer: 06026370.4
(22) Anmeldetag: 19.12.2006
(51) Int. Cl.: H04L 9/32, H04L 29/06, G06F 21/00

(54) **Verfahren, Netzknoten sowie zentrale Servereinrichtung zur Sicherung einer Kommunikation**
Method, network node and central server configuration for protecting a communication
Procédé, noeud de communication et dispositif de serveur central destinés à la sécurisation d'une communication

(43) Veröffentlichungstag der Anmeldung: 25.06.2008
(73) Patentinhaber: Siemens Enterprise Communications GmbH & Co. KG, 81379 München (DE)
(72) Erfinder: Busser, Jens-Uwe, Dr., 81739 München (DE)
(74) Vertreter: Fritzsche, Thomas

(56) Entgegenhaltungen:
- US-A1- 2003 070 070
- US-A1- 2003 163 687
- HUNT R: "Technological infrastructure for PKI and digital certification" COMPUTER COMMUNICATIONS, ELSEVIER SCIENCE PUBLISHERS BV, AMSTERDAM, NL, Bd. 24, Nr. 14, 15. September 2001 (2001-09-15), Seiten 1460-1471, XP004305776 ISSN: 0140-3664

## Beschreibung

Die Erfindung betrifft ein Verfahren zur Sicherung einer Kommmunikation gemäß dem Oberbegriff des Anspruchs 1 sowie einen Netzknoten gemäß dem Gattungsbegriff des Anspruchs 12 und ein Netzwerksystem gemäß dem Gattungsbegriff des Anspruchs 13.

Es ist bekannt, Kommunikation abzusichern, d.h. den insbesondere vertraulichen Inhalt unberechtigten Dritten gegenüber unzugänglich zu machen. In der heutigen Zeit der zunehmenden Vernetzung und dem Verschmelzen von Daten- und Kommunikationsnetzen ist Sicherheit eine der wichtigsten Anforderungen der modernen Kommunikation geworden.

Diese Anforderung wurde beispielsweise in der Client-Server-Kommunikation zuerst durch passwortbasierte Sicherheitsarchitekturen erfüllt, die aber mittlerweile zunehmend durch Public-Key-Infrastruktur (PKI)-basierte Lösungen ergänzt oder sogar ersetzt werden.

In dezentralen Kommunikationsnetzwerken, wie sie beispielsweise zur Realisierung der Kommunikation per E-Mail zugrunde liegen, setzt man dagegen eher auf dezentrale Lösungen wie Pretty Good Privacy (PGP). Neuerdings verwendet man aber auch hier verstärkt PKI-basierte Lösungen, vor allem innerhalb von Firmen.

Für Kommunikation zwischen Firmen wird ein Wechsel von PGP-basierten Lösungen hin zu PKI langsam vonstattengehen, da es häufig noch keinen für PKI notwendigen externen Zugriff auf Zertifikatsserver und entsprechende Brücken-Zertifikate gibt. Auch im Privatbereich ist die Bedeutung von PGP sehr hoch, da es den meisten Anwendern zu teuer ist, ein Zertifikat von einer professionellen PKI zu erwerben.

Problematisch bei PGP ist aber die sichere Authentifizierung von Anwendern, die man nicht direkt kennt. Nach Erzeugung eines asymmetrischen Schlüsselpaars wird der öffentliche Schlüssel üblicherweise auf einem Schlüsselserver hinterlegt; der private Schlüssel wird geheim gehalten. Benötigt jemand den öffentlichen Schlüssel eines anderen Teilnehmers, kann er sich diesen vom Schlüsselserver zusenden lassen. Allerdings ist diese Methode nicht sicher, da nicht gewährleistet ist, dass er wirklich den Schlüssel des gewünschten Teilnehmers bekommt: Beispielsweise kann jeder unter beliebigen Namen Schlüssel auf dem Server hinterlegen; außerdem ist es möglich, dass die Suchanfrage an einen nicht vertrauenswürdigen Server weitergeleitet wird, der vorsätzlich falsche Schlüssel herausgibt.

Zur Lösung dieses Problems ist es bekannt, dass seitens einiger Anwender mit jeder E-Mail ein sogenannter Fingerprint ihres PGP Schlüssels versendet wird. Erhält man zu einem späteren Zeitpunkt den PGP Schlüssel eines solchen Anwenders z.B. vom Schlüsselserver oder mit einer späteren E-Mail, dann kann man mittels dieses Fingerprints überprüfen, ob man den dazu passenden Schlüssel erhalten hat. Auch hier ist natürlich ein so genannter "man-in-the-middle" Angriff möglich, wenn auch sehr schwierig, da er sehr frühzeitig erfolgen muss.

Ein weiterer Ansatz besteht darin, für PGP-Nutzer ein so genanntes Vertrauensnetzwerk ("web of trust") aufzubauen. Dazu signiert jeder Anwender die Schlüssel derjenigen Anwender, die ihm persönlich bekannt sind, und lässt sich auch seinen Schlüssel entsprechend signieren. Der Kreis der persönlich Bekannten ist naturgemäß auf eine Untermenge der möglichen Kommunikationspartner begrenzt. Daher ist es bekannt, auf so genannten "key signing parties" ein Treffen von Anwendern zu ermöglichen, damit diese sich gegenseitig (nach entsprechender Authentifizierung, beispielsweise durch Vorzeigen eines Lichtbildausweises), ihre Schlüssel bestätigen und dadurch weitere Verknüpfungen im Vertrauensnetzwerk erzeugen. Ferner wird beispielsweise auf der Messe CeBit seitens des Heise-Verlags angeboten, Schlüssel von Anwendern nach entsprechender Authentifizierung zu signieren.

Um einen Schlüssel einem anderen Teilnehmer wirklich authentisch zuordnen zu können, ist es notwendig, eine oder besser noch mehrere vollständige Ketten des Vertrauens ("chain of trust") zu diesem zu finden. Dafür gibt es "pathfinder" Server, welche einen oder mehrere solche Pfade mittels einer großen Datenbank mit allen Schlüsseln und ihren Bestätigungen durch andere Anwender enthalten. Dieses Konzept hat sich aber nicht durchgesetzt, da aufgrund der ständig wachsenden Anzahl von Teilnehmern sehr leistungsfähige und teure Server, die zudem jederzeit erreichbar sein müssen, notwendig sind.

Zwar kann diese Suche prinzipiell auch lokal von jedem Anwender selbst durchgeführt werden, allerdings benötigt er dazu eine sehr große Datenbank (bereits im Jahre 2002 mehrere Gigabyte), die auch ständig aktualisiert werden muss.

Die US 2003/0163687 A1 offenbart ein Verfahren zur Sicherung einer Kommunikation zwischen zu einem dezentralen Netzwerk gehörenden Netzknoten gemäß dem Oberbegriff des Anspruchs 1 sowie ein entsprechendes System und hat die Zielsetzung, es einem Nutzer zu ermöglichen, eine Wurzel (root) zu wählen, von der ein öffentlicher Hauptschlüssel (root public key) von jedem Knoten in einer PKI (Public-Key-Infrastruktur) erhalten werden kann, und den öffentlichen Hauptschlüssel als einen globalen Hauptschlüssel zu verwenden, um eine Kette von Zertifikaten entlang eines Pfades zu jedem anderen Knoten im PKI zu erhalten. Hierfür müssen jedoch erhebliche Datenmengen übertragen werden.

Die US 2003/0070070 A1 bezieht sich auf ein Peer-to-Peer-Netz, in dem alle Netzelemente gleich sind und das somit - anders als bei der vorliegenden Erfindung - als ein nichthierarchisches System anzusehen ist.

Die der Erfindung zugrunde liegende Aufgabe ist es, ein Verfahren sowie eine Anordnung anzugeben, welche die Nachteile des Standes der Technik beheben und insbesondere eine Entlastung der Netzressourcen durch die Reduzierung von im Netz zu übertragenden Datenmengen ermöglichen.

Gelöst wird diese Aufgabe ausgehend von dem Verfahren gemäß dem Oberbegriff des Anspruchs 1 durch dessen kennzeichnende Merkmale, ausgehend von dem Netzknoten gemäß dem Gattungsbegriff des Anspruchs 12 durch dessen kennzeichnende Merkmale sowie ausgehend von dem Netzwerksystem gemäß dem Gattungsbegriff des Anspruchs 13 durch dessen kennzeichnende Merkmale.

Bei dem erfindungsgemäßen Verfahren zur Sicherung einer Kommunikation zwischen zu einem dezentralen Netzwerk gehörenden Netzknoten, bei dem zur Sicherung von Daten ein ein asymmetrisches Verschlüsselungsverfahren realisierender öffentlicher Schlüssel sowie ein privater Schlüssel zumindest einem Teil der Netzknoten verfügbar ist, erfolgt eine Zertifizierung der Schlüssel derart, dass zumindest ein erster Netzknoten der Netzknoten einer obersten ersten Klasse zugeordnet wird, wobei der erste Netzknoten als ein erstes Zertifikat seinen öffentlichen Schlüssel selbst signiert, jedem seiner direkt benachbarten zweiten Netzknoten jeweils als ein zweites Zertifikat dessen öffentlichen Schlüssel signiert, jeweils das erste Zertifikat sowie das jeweilige zweite signierte Zertifikat dem jeweiligen direkt benachbarten Netzknoten übermittelt, die zweiten Netzknoten einer zur obersten Klasse nächst niedrigeren zweiten Klasse zugeordnet werden, wobei jeder zweite Netzknoten jedem seiner direkt benachbarten Netzknoten als ein drittes Zertifikat dessen öffentlichen Schlüssel signiert, den öffentlichen Schlüssel des Netzknotens der höheren Klasse als ein viertes Zertifikat signiert, das dritte Zertifikat und das vierte Zertifikat gemeinsam mit allen von Netzknoten höherer Klassen erhaltenen signierten Zertifikaten dem jeweiligen direkt benachbarten zu höheren Klassen disjunkten Klasse zugeordneten Knoten übermittelt und die durch die zweiten Netzknoten durchgeführte Prozedur für alle Netzknoten einer sich aus den jeweils direkt benachbarten Netzknoten ergebenden nächst niedrigeren Klasse wiederholt wird.

Vorteile der Erfindung sind ein vereinfachtes Suchen und Bilden von Vertrauensketten, die zudem allein auf lokalem Wissen zweier kommunizierender Netzknoten basiert. Es bietet auch eine höhere Sicherheit, da auf diesem Weg mehrere Vertrauensketten gefunden werden können.

Bei einer vorteilhaften Weiterbildung des erfindungsgemäßen Verfahrens dergestalt, dass die Signierungen zumindest teilweise im Rahmen eines initialen Vorgangs, insbesondere im Rahmen einer Installation zumindest eines Teils des Netzwerks, erfolgt, wird sichergestellt, dass die Netzknoten lediglich einmalig in einer Anfangsphase mit der erfindungsgemäßen Bildung einer Vertrauenskette beschäftigt sind und in allen folgenden regulären Betriebsarten eine sichere Kommunikation zur Verfügung gestellt werden kann.

Gemäß einer weiteren Ausgestaltung des erfindungsgemäßen Verfahrens ist es dabei vorteilhaft, wenn das erste Zertifikat, zweite Zertifikat, jedes dritte Zertifikat und/oder jedes vierte Zertifikat im Netzknoten gespeichert wird, so dass diese ständig verfügbar sind und nicht laufend neu erzeugt werden müssen, was die erfindungsgemäße Grundidee der Reduzierung des Aufwands beim Bilden von Vertrauensketten unterstützt.

Durch die Weiterbildung derart, dass das erste Zertifikat, zweite Zertifikate, die dritten Zertifikate und/oder die vierten Zertifikate an zumindest eine zentrale Servereinrichtung übertragen werden, die zentrale Servereinrichtung als ein fünftes Zertifikat ihren öffentlichen Schlüssel selbst signiert, die zentrale Servereinrichtung jeweils als ein sechstes Zertifikat zumindest einen Teil der übertragenen Zertifikate signiert, wird das Vorhalten der sicherheitsrelevanten Zertifikate auf eine bzw. einige wenige Einrichtungen beschränkt, welche im Vorfeld sorgfältig nach ihrer Vertrauenswürdigkeit ausgewählt werden. Dabei erfolgt bevorzugt seitens der zentralen Servereinrichtung das Signieren derart, dass für den Fall, dass ein Netzknoten der zentralen Servereinrichtung mehrere Zertifikate übermittelt, die zentrale Servereinrichtung das sechste Zertifikat als die übermittelten Zertifikate zusammenfassendes Zertifikat signiert und an den jeweiligen Netzknoten übermittelt. Hierdurch wird zwar keine weitere vertrauenssteigernde Wirkung erreicht; aber die Netzknoten werden von der Prüfung der Signaturen aller Zertifikate der Zertifikatskette bis hin zum Referenzknoten befreit, und ihre Ressourcen geschont. Außerdem erhält eine derartige Servereinrichtung eine bessere Übersicht über vorhandene Netzknoten und kann hierdurch betrügerische Zertifikate leichter detektieren.

Bei einer weiteren vorteilhaften Weiterbildung erfolgt seitens der zentralen Servereinrichtung das Signieren derart, dass für den Fall, dass ein Netzknoten der zentralen Servereinrichtung mehrere mit dem gleichen ersten Zertifikat beginnenden Zertifikate übermittelt, die zentrale Servereinrichtung das sechste Zertifikat als die übermittelten Zertifikate zusammenfassendes Zertifikat signiert und an den jeweiligen Netzknoten übermittelt.

Eine weitere vorteilhafte Ausgestaltung besteht darin, dass ein ein sechstes Zertifikat besitzender Netzknoten bei Erhalt eines weiteren ersten Zertifikats, zweiten Zertifikats, dritten Zertifikats oder vierten Zertifikats, das weitere Zertifikat sowie das sechste Zertifikat der zentralen Servereinrichtung übermittelt und die zentrale Servereinrichtung als ein aktualisiertes sechstes Zertifikat das weitere Zertifikat sowie das sechste Zertifikat signiert und an den jeweiligen Netzknoten übermittelt. Hierdurch entfällt ein erneutes Übermitteln aller ersten, zweiten und dritten Zertifikate an die zentrale Servereinrichtung und zudem ist die Servereinrichtung von der erneuten Erzeugung von Zertifikaten zu bereits bekannten Ketten von Zertifikaten befreit, da lediglich das neu hinzugekommene Zertifikat in die Kette des bisherigen sechsten Zertifikats aufgenommen wird.

Gemäß einer weiteren vorteilhaften Ausgestaltung signiert die zentrale Servereinrichtung nur für diejenigen Zertifikate ein sechstes Zertifikat, die mit einem ihr bekannten ersten Zertifikat beginnen. Hierdurch kann eine Steigerung der Vertrauensbildung derart erfolgen, dass die zentrale Servereinrichtung nur für besonders vertrauenswürdige Referenzknoten, also erste Netzknoten im Sinne der Erfindung, zulässt, insbesondere hierfür die seitens der Referenzknoten erfolgte Selbstsignierung der ersten Zertifikate, bestätigt. Somit können auch Vertrauensketten, die mit unbekannten Referenzknoten beginnen, einfach verworfen werden.

Dabei ist es gemäß einer Weiterbildung denkbar, dass mehrere zentrale Servereinrichtungen betrieben werden, denen erste Zertifikate derart zugeordnet werden, dass den zentralen Servereinrichtungen zueinander disjunkte erste Zertifikate bekannt sind. Auf diese Art kann man weitere Sicherheitsbeziehungen aufbauen und die Last der Tätigkeit der Server ressourcenschonender verteilen.

Gemäß einer Weiterbildung der Erfindung signiert in vorteilhafter Weise jeder zweite Netzknoten jedem seiner direkt benachbarten Netzknoten als ein drittes Zertifikat dessen öffentlichen Schlüssel, wobei das dritte Zertifikat und das sechste Zertifikat zur Übermittlung aller von Netzknoten höherer Klassen erhaltenen signierten Zertifikate dem jeweiligen direkt benachbarten zu höheren Klassen disjunkten Klasse zugeordneten Knoten übermittelt wird und der jeweilige direkt benachbarte Knoten den öffentlichen Schlüssel des zweiten Netzknotens der höheren Klasse als ein viertes Zertifikat signiert. Hier wird also nicht die vollständige Kette bis zum Referenzknoten übermittelt, sondern das sechste Zertifikat des Netzknotens und das von ihm erstellte zweite Zertifikat, so dass die Nachbarnetzknoten darauf basierend die Kette bildet, in dem lediglich noch das Zertifikat des zweiten Knotens signiert und durch Hinzufügen des dritten und sechsten Zertifikats bildet bzw. beispielsweise durch die zentrale Servereinrichtung bilden lässt.

Alternativ bzw. ergänzend ist es von Vorteil, wenn das Signieren des ersten Zertifikates, des zweiten Zertifikates, des dritten und des vierten Zertifikates durch die zentrale Servereinrichtung erfolgt.

Der erfindungsgemäße Netzknoten sowie das erfindungsgemäße Netzwerksystem ermöglichen die Realisierung des Verfahrens, da sie Mittel zur Durchführung des erfindungsgemäßen Verfahrens aufweisen, so dass hierdurch dessen Vorteile wirksam werden.

Weitere Einzelheiten sowie Vorteile der Erfindung werden anhand von Ausführungsbeispielen der Erfindung nachfolgend an Hand von Zeichnungen näher erläutert.

Dabei zeigen in schematischer Darstellung
- Figur 1: als ein der Erfindung zugrunde liegendes beispielhaftes Szenario ein Vertrauensnetzwerk gemäß PGP,
- Figur 2: als Ausführungsbeispiel eine erfindungsgemäße Knotenhierarchie mit einem Referenzknoten,
- Figur 3: aus der Anwendung des Verfahrens im Szenario entstehende Zertifikatsketten,
- Figur 4: als weiteres Ausführungsbeispiel eine erfindungsgemäße Knotenhierarchie mit zwei Referenzknoten,
- Figur 5: mögliche Angriffsszenarien,
- Figur 6: als ein weiteres Ausführungsbeispiel ein erfindungsgemäßer Einsatz von Zertifizierungsservern zur Performancesteigerung.

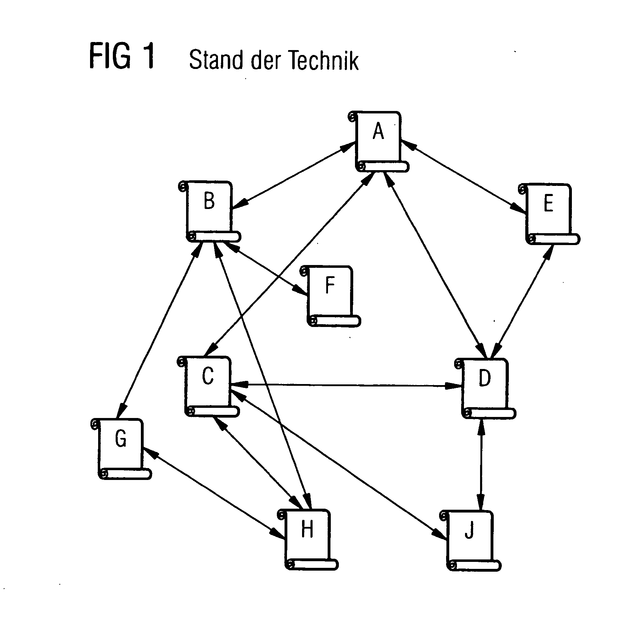

In Figur 1 ist eine beispielhafte Anordnung von Netzknoten wiedergegeben, wie er in einem Netz nach dem Stand der Technik gegeben sein könnte. Die Anordnung von Netzknoten gibt somit ein Szenario an, anhand dessen der erfinderische Gedankengang zur Problemfindung dargelegt werden soll.

Die Darstellung gibt durch die gezeichneten Pfeile eine Vertrauensbeziehung. Diese Vertrauensbeziehung ist ausgehend von einem ersten Knoten A dargestellt, der einen zweiten Knoten B, einen dritten Knoten C sowie einen vierten Knoten D und einen fünften Knoten E kennt, wobei dies auch jeweils umgekehrt gilt, was durch den Doppelpfeil symbolisiert ist und im Folgenden nicht weiter explizit herausgestellt wird.

Von diesen Knoten kennt der zweite Knoten B einen sechsten Knoten F, einen siebten Knoten G sowie einen achten Knoten H, wobei der siebte Knoten H auch dem dritten Knoten C bekannt ist. Ferner kennt der dritte Knoten C auch einen neunten Knoten J, der wiederum dem vierten Knoten D bekannt ist.

Es sei nun angenommen, dass der sechste Knoten F mit dem neunten Knoten J kommunizieren möchte. Aus der dargestellten Vertrauensbeziehung ergibt sich, dass die Identität vom neunten Knoten J mit Zertifikaten des dritten Knotens C und des vierten Knotens D bestätigt werden kann, aber der sechste Knoten F und auch sein Nachbarknoten, der zweite Knoten B, kennen diese nicht, können also nicht beurteilen, ob der dritte Knoten C, der vierte Knoten D und der neunte Knoten J wirklich vertrauenswürdig sind.

Umgekehrt kennt weder der neunte Knoten J noch der dritte Knoten C oder der vierte Knoten D den sechsten Knoten F oder seinen Nachbarn, den zweiten Knoten B. Es folgt also hieraus, dass, sobald die kürzeste Kette wie in diesem Fall mehr als 2 Zwischenknoten enthält, es nicht mehr ohne Weiteres möglich ist, eine Vertrauenskette zu finden.

Dies könnte vereinfacht werden, wenn wie bei online-Diensten wie openBC oder lokalisten.de bekannt, sich Anwender anzeigen lassen können, über welche anderen Anwender sie mit einem beliebigen Dritten bekannt sind. Hier werden auch kurze Pfade mittels einer Datenbank gesucht, wobei dies mit dem Dijkstra-Algorithmus erfolgen könnte.

Eine solche Pfadsuche kann man theoretisch auch ohne Datenbank durchführen, indem der Suchende eine Nachricht an alle seine Bekannten sendet, denen er vertraut, und diese wiederum an ihre Bekannten, etc. bis die Suchanfrage auch beim Gesuchten ankommt, der dann den Pfad rekonstruieren kann. Allerdings ist diese Methode praktisch nicht einsetzbar, da hierdurch das gesamte Netzwerk geflutet und somit eine enorme Last erzeugt werden würde.

Wenn weitere Informationen über den Gesuchten zur Verfügung stehen, z.B. Wohnort oder Arbeitgeber, kann mit heuristischen Methoden versucht werden, eine Vertrauenskette zu einem Anwender zu finden, der ähnliche Charakteristika aufweist und den Gesuchten deswegen möglicherweise kennt. Dieses Verfahren führte zur Entdeckung des so genannten Kleine-Welt-Phänomens. Ist man dem Ziel bereits sehr nahe gekommen, kann man auch ein auf wenige Schritte begrenztes Fluten einleiten, welches nur einen sehr kleinen Teil des Netzwerkes umfasst. Ein Erfolg ist bei diesem Verfahren aber ungewiss.

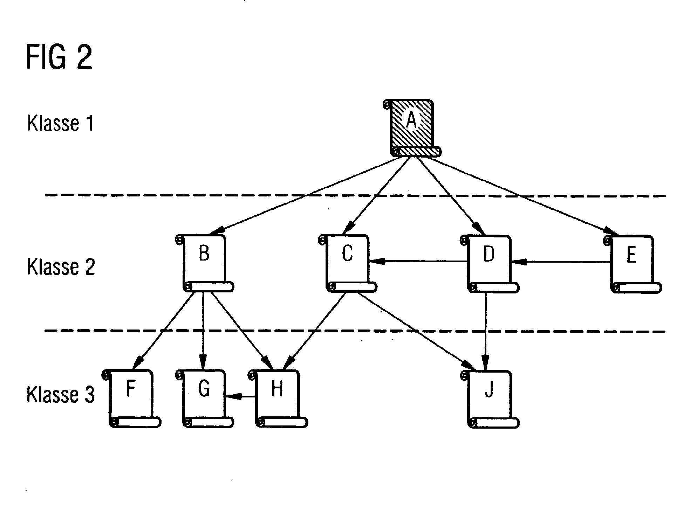

Hiervon ausgehend wird in Figur 2 anhand der beispielhaften Knotenanordnung ein Ausführungsbeispiel des erfindungsgemäßen Verfahrens erläutert, welches unter anderem auf dem erfindungswesentlichen Kerngedanken gerichteter Zertifikatsketten beruht, und somit auf einer Art Hierarchie, wie in der Darstellung an der Klassifizierung angedeutet werden soll.

Die erfindungsgemäße Verfahrensweise ist bei dem Ausführungsbeispiel wie folgt gegeben:

Es wird der erste Knoten A ausgewählt, vorzugsweise ist dies der Netzknoten eines besonders bekannten und vertrauenswürdigen Teilnehmers. Dieser wird als Referenzknoten gesetzt und entspricht somit der einer höchsten Ebene KLASSE 1. Er signiert neben einem eigenen öffentlichen Schlüssel auch die öffentlichen Schlüssel aller ihm bekannten Knoten.

Seine Nachbarn, der zweite Knoten B, der dritte Knoten C, der vierte Knoten D und der fünfte Knoten E, befinden sich logisch in einer nächsttieferen zweiten Ebene KLASSE 2. Sie erhalten vom ersten Knoten A sein selbstsigniertes Zertifikat A->A sowie das jeweils für sie erstellte Zertifikat A->B (bzw. A->C, A->D oder A->E). Nun signieren sie den im Zertifikat A->A enthaltenen öffentlichen Schlüssel des ersten Knotens A mit ihrem eigenen Schlüssel. Diese neuen Zertifikate seien mit B->A (bzw. C->A, D->A oder E->A) bezeichnet. Mit diesen Zertifikaten kann die entstehende Zertifikatskette in beiden Richtungen verwendet werden. Erfindungsgemäß ist es allerdings nicht notwendig, diese Zertifikate an den Referenzknoten A zu senden; vorteilhaft ist es daher, das Senden von Zertifikaten an Knoten, die in der Hierarchie höher stehen, zu vermeiden, um diese nicht unnötig zu belasten.

Anschließend signieren diese Knoten B...E nun ihrerseits die Schlüssel ihrer Nachbarn, welche logisch einer dritten Ebene KLASSE 3 zugeordnet sind, und senden ihnen das eigene, hierarchisch der zweiten Ebene KLASSE 2 zugeordnete, Zertifikat (z.B. A->B), das den Schlüssel des Referenzknotens A zertifizierende Zertifikat (z.B. B->A) sowie deren Zertifikat (z.B. B->F) der dritten Ebene KLASSE 3 zu.

Dieses Verfahren pflanzt sich durch das ganze Netzwerk fort, bis jeder Knoten A...J zumindest ein eigenes Zertifikat mit einer Zertifikatskette (A<->B<->...<->H->J) bis zum Referenzknoten, dem ersten Knoten A, erhalten hat, welches er durch ein weiteres Zertifikat J->H zu einer vollständigen bidirektionalen Zertifikatskette ergänzt.

Die selbstsignierten Zertifikate A->A, B->B, etc. der Knoten dienen dabei nur der Übermittlung von öffentlichen Schlüsseln und Teilnehmerdaten in einer gebräuchlichen Weise und werden nach Ausstellung der Zertifikatsketten nicht mehr benötigt.

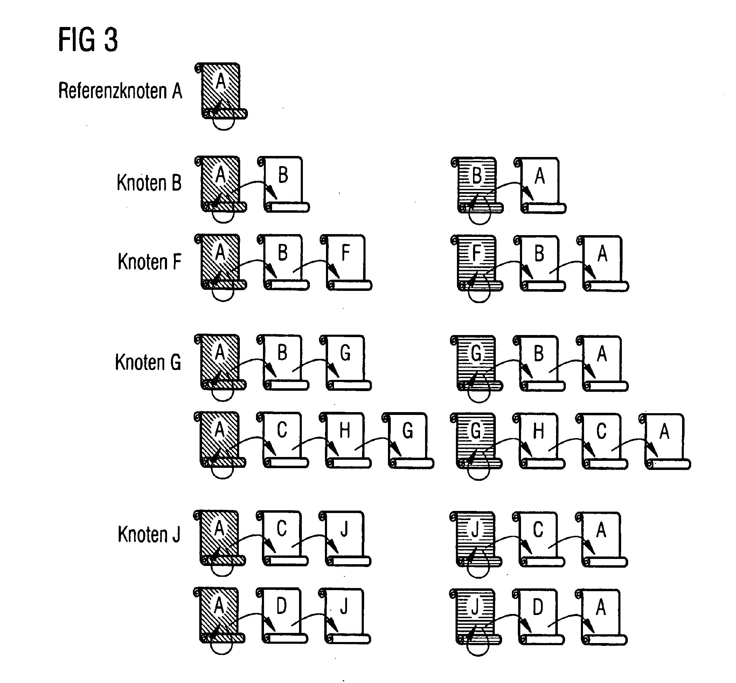

In Figur 3 sind die Zertifikatsketten detailliert dargestellt. Dabei bezeichnet ein Zertifikat mit einem Pfeil auf sich selbst ein selbstsigniertes Zertifikat (z.B. A->A), während ein Pfeil auf ein anderes Zertifikat die Zertifizierung eines öffentlichen Schlüssels eines anderen Teilnehmers bedeutet (z.B. A->B).

Demnach hat der sechste Knoten F vom zweiten Knoten B eine erste Kette A<->B->F erhalten, die er durch Zertifizierung des Schlüssels von Knoten B zur vollständigen bidirektionalen Zertifikatskette A<->B<->F ergänzt, während der siebte Knoten G vom zweiten Knoten B eine zweite Kette A<->B->G sowie vom achten Knoten H eine dritte Kette A<->C<->H->G erhalten hat, welche er ebenfalls zu vollständigen bidirektionalen Zertifikatsketten A<->B<->G und A<->C<->H<->G ergänzt.

Die selbstsignierten Zertifikate A->A, B->B, etc. dienen dabei nur der Übermittlung von öffentlichen Schlüsseln und Teilnehmerdaten in einer gebräuchlichen Weise und werden nach Ausstellung der Zertifikatsketten nicht mehr benötigt.

Im Folgenden werden nur noch vollständige bidirektionale Zertifikatsketten betrachtet, und als X-Y-Z bezeichnet, wobei das Symbol "-" für gegenseitige Zertifizierung zwischen den beiden Teilnehmern steht.

Möchten nun zwei Knoten sicher miteinander kommunizieren, so tauschen sie ihre Zertifikatsketten aus. Beispielsweise kann der siebte Knoten G die zweite Kette A-B-G an den neunten Knoten J senden und erhält dafür eine vierte Kette A-D-J vom neunten Knoten J. Beide können nun eine fünfte Kette G-B-A-D-J konstruieren und haben somit eine geschlossene Vertrauenskette zueinander gefunden.

Tauschen beide Teilnehmer ihre beiden Ketten aus, so kann zusätzlich noch eine sechste Kette G-H-C-A-C-J gefunden werden, die zu G-H-C-J verkürzt werden kann und somit bis auf Anfangs- und Endknoten völlig disjunkt zur fünften Kette G-B-A-D-J ist.

Je mehr völlig oder zumindest teilweise disjunkte Ketten gefunden werden können, umso größer kann das Vertrauen in die Identität des Kommunikationspartners sein.

Andererseits nimmt das Vertrauen mit zunehmender Kettenlänge ab, weil jeder Knoten in der Kette potentiell nicht vertrauenswürdig sein könnte. Eingeschränktes Vertrauen kann daher auch hier (wie beim gewöhnlichen PGP-Vertrauensnetzwerk) durch eine erfindungsgemäße Weiterbildung dadurch modelliert werden, dass man weniger vertrauenswürdige Beziehungen wie längere Ketten betrachtet.

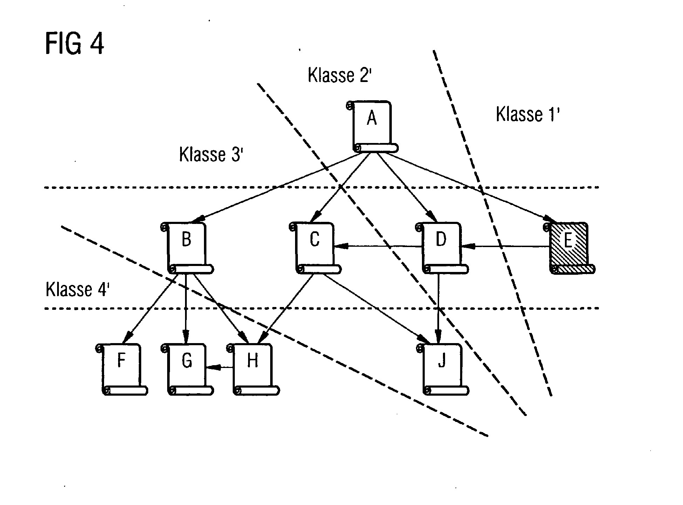

Kennt beispielsweise der achte Knoten H den siebten Knoten G weniger gut und ordnet ihm daher nur 33% Vertrauen zu, so kann die Verbindung G-H wie eine Kette mit 2 zusätzlichen, normal vertrauenswürdigen Knoten G-X-X-H betrachtet werden. Ein weiteres Ausführungsbeispiel der Erfindung ist in Figur 4 dargestellt. Das dargestellte Beispiel stellt dabei die auf vorteilhafte Weise mit mehreren Referenzknoten weitergebildete Erfindung dar.

Es sei im Folgenden daher angenommen, dass neben dem ersten Knoten A auch der fünfte Knoten E als Referenzknoten E benutzt wird. Zwar steigt der Aufwand an zu erzeugenden und zu verteilenden Zertifikaten linear mit der Anzahl der Referenzknoten, aber hiermit können auch mehr Vertrauensketten gefunden werden, was das Vertrauen und die Sicherheit der Lösung erhöht. Außerdem beugt man so dem Auseinanderbrechen der Sicherheitsinfrastruktur vor, wenn der einzige Referenzknoten, z.B. wegen Bekanntwerden seines geheimen Schlüssels, für ungültig erklärt werden muss.

In den Figuren 2 und 4 ist die Vertrauensbeziehung zwischen zwei Knoten jeweils durch einen Pfeil vom das Zertifikat ausstellenden Knoten hin zum das Zertifikat erhaltenden Knoten dargestellt. Umgekehrt gilt natürlich auch eine Vertrauensbeziehung, denn nur wenn z.B. der zweite Knoten B dem als Referenzknoten benutzten ersten Knoten A vertraut, darf er das vom ersten Knoten A erstellte Zertifikat verwenden.

Bekommt der zweite Knoten B eine nicht dargestellte siebte Zertifikatskette B-X-Y-Z zugesandt von einem nicht dargestellten Knoten X, den er selbst nicht kennt und dessen Schlüssel er nicht bestätigen würde, so darf er diese Kette erfindungsgemäß nicht verwenden bzw. keinesfalls weitergeben. Es dürfen also nur Zertifikatsketten von vertrauenswürdigen, direkten Nachbarn verwendet werden.

Vorteil dieses Verfahrens ist, dass trotz der (scheinbar oder tatsächlichen) hierarchischen Struktur der bzw. die Referenzknoten A, E nicht belastet werden, wenn andere Knoten B...D, F...J miteinander kommunizieren wollen und ihre Zertifikatsketten vergleichen, da sie in diesen Prozess in keiner Weise eingebunden sind. Referenzknoten müssen - wie alle anderen Knoten auch - lediglich die Schlüssel ihrer Nachbarn signieren.

Die Lösung ist also völlig dezentral, und es sind keine Server notwendig. Die Zeitdauer der Verbreitung (Propagation) der Zertifikatsketten bei der Erzeugung skaliert mit log N, mit N = Anzahl der Knoten, ebenso wie Kettenlänge.

Die mittlere Zeit zum Überprüfen einer Kette skaliert mit log(N). Zusätzlich sinkt bei längeren Ketten die Wahrscheinlichkeit, dass alle Knoten in der Kette vertrauenswürdig sind; man muss daher mehr disjunkte Ketten finden und überprüfen. Die Anzahl der zu überprüfenden Zertifikate nimmt daher mit der Größe des Netzwerkes zu und kann daher bei leistungsschwachen Knoten zu Performanceproblemen führen. Dies kann durch vorteilhafte Ausgestaltungen aufgefangen werden.

Ein Vorteil der Erfindung ist, dass herkömmliche PGP-Netzstrukturen zum Aufbau dieses hierarchischen Vertrauensnetzwerkes herangezogen werden können. Vorzugsweise wird man dabei mehrere, möglichst weit voneinander entfernte, vertrauenswürdige und mit vielen anderen Knoten vernetzte Knoten als Referenzknoten verwenden.

Auch mit diesem Verfahren wird man nicht alle möglichen Vertrauensketten finden, und in vielen Fällen nicht einmal die kürzeste. Allerdings ist sichergestellt, dass immer mindestens eine, im Falle starker Vermaschung im Netzwerk oder bei mehreren Referenzknoten sogar einige Ketten gefunden werden, und zwar sehr schnell, ohne Datenbankserver und Netzflutung, allein mit dem lokalen Wissen der Knoten.

Voraussetzung für die Anwendung dieses Verfahrens ist, dass alle Knoten zu einem einzigen Vertrauensnetzwerk zusammengeführt werden müssen. Allerdings hat auch das normale PGP (mit Schlüssel- und Pathfinder-Server) dieses Problem, da auch hier isolierte Subnetze nicht sicher mit einbezogen werden können.

Ein weiterer Schwachpunkt der PGP-basierten Lösungen gegenüber PKI-basierten Systemen ist, dass man mehreren Anwendern vertrauen muss, nicht nur einem einzigen zentralen und in der Regel gut gesicherten Zertifizierungsserver (CA). Dieser Schwachpunkt wird erfindungsgemäß durch das hier beschriebene Konzept zwar nicht vollständig behoben; aber da man nun viel einfacher, d.h. ohne Server oder großen Aufwand an Nachrichten, Vertrauensketten finden kann, kann man die Anforderungen an diese Ketten höher setzen und damit eine höhere Sicherheitsstufe für die tatsächliche Identität des Kommunikationspartners erreichen.

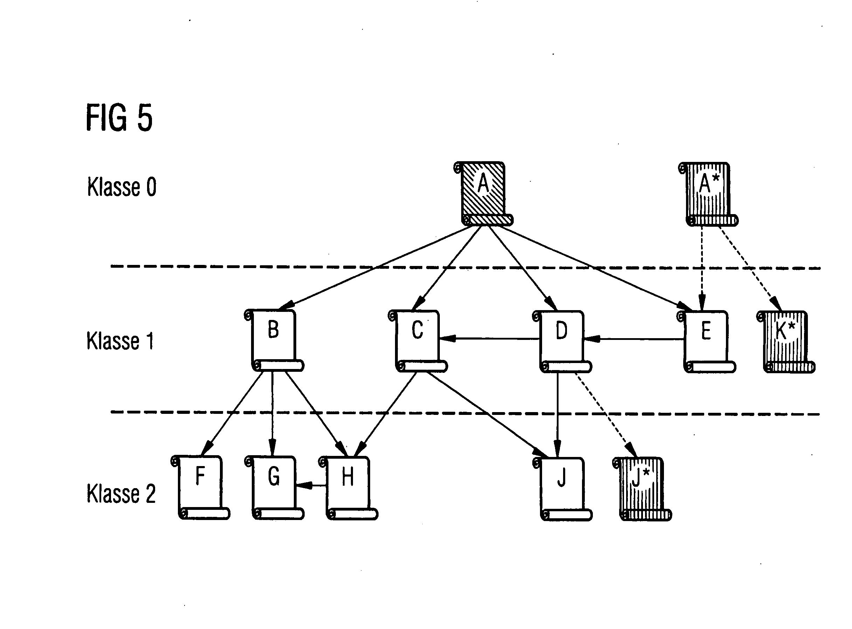

In Figur 5 ist ein Angriffsszenario dargestellt, dabei sei ein möglicher Angriff gegen das Vertrauensnetzwerk durch die Erstellung eines achten Zertifikates J* durch den vierten Knoten D angenommen, welches aber nicht vom neunten Knoten J, sondern vom vierten Knoten D selbst verwendet wird. Wird der Angriff entdeckt, so steht zweifelsfrei fest, dass er vom vierten Knoten D begangen wurde, da nur der vierte Knoten D ein solches Zertifikat erzeugen kann.

Ein weiterer Angriff könnte die Erzeugung einer neunten Zertifikatskette A*-K* durch den fünften Knoten E sein. Allerdings kann der fünfte Knoten E damit erst einmal keine Vertrauensketten aufbauen, da die neunte Zertifikatskette A*-K* nicht mit anderen Ketten z.B. A-B-F zusammenpasst.

Wenn der fünfte Knoten E aber seinen eigenen Schlüssel mit einem zehnten Zertifikat A* signiert und an weitere Knoten, die in der Hierarchie unter ihm angesiedelt sind , ausliefert, kann E unter Umständen zwar kurzfristig eine eigene Hierarchie mit A* als Referenzknoten aufbauen; allerdings kann auch hier zweifelsfrei der Betrug von E festgestellt werden, sobald z.B. Knoten D, der das originale Rootzertifikat A kennt, das gefälschte Zertifikat A* in die Hände fällt. Dennoch kann es vorteilhaft sein, einige Rootzertifkate in authentischer Weise initial z.B. zusammen mit der Anwendersoftware auszuliefern. Diese Angriffe setzen aber alle voraus, dass sich mindestens ein Knoten in der Kette befindet, der nicht vertrauenswürdig ist.

Sollte ein Teilnehmer einen Missbrauch feststellen, so ist ein einfacher Zertifikatswiderruf möglich: Entdeckt ein Teilnehmer, dass z.B. Knoten D für Knoten J zwei unterschiedliche Zertifikate J und J* ausgestellt hat, so kann er beide an den ersten Knoten A senden und diesen vom Missbrauch durch den vierten Knoten D überzeugen. Der erste Knoten A widerruft dann das Zertifikat vom vierten Knoten D und schickt es an alle seine Nachbarn. Auch wenn der vierte Knoten D diesen Widerruf nicht weiterleitet, so wird dieser dennoch auf Umwegen auch alle Knoten erreichen, die in der Hierarchie unterhalb vom vierten Knoten D angeordnet sind, sofern das Netz nur gut genug vernetzt ist.

Durch das erfindungsgemäße Verfahren lassen sich damit zusammenfassend unter anderem folgende Vorteile erzielen:
- Einfache Suche nach Vertrauensketten in einem Vertrauensnetzwerk ("web of trust")
- Suche allein mit lokalem Wissen der beiden kommunizierenden Knoten, keine Nachrichten an andere Knoten notwendig
- Keine zentralen Server oder Datenbanken notwendig
- Höhere Sicherheit, da mehr Vertrauensketten gefunden werden können
- Hohe Redundanz möglich durch Verwendung mehrerer Referenzknoten
- Zertifikatswiderruf möglich

Wie oben angesprochen, wächst bei dieser Lösung die durchschnittliche Länge L der Vertrauensketten mit log(N), wie bereits oben berichtet. Da andererseits das Vertrauen mit zunehmender Länge der Kette abnimmt, benötigt man mehr Ketten und damit noch mehr Zertifikate, die bei einem Austausch zwischen zwei Kommunikationspartnern überprüft werden müssen. Dies kann bei leistungsschwachen Knoten zu Performanceproblemen führen, wenn diese in Echtzeit Dutzende von Zertifikaten prüfen sollen.

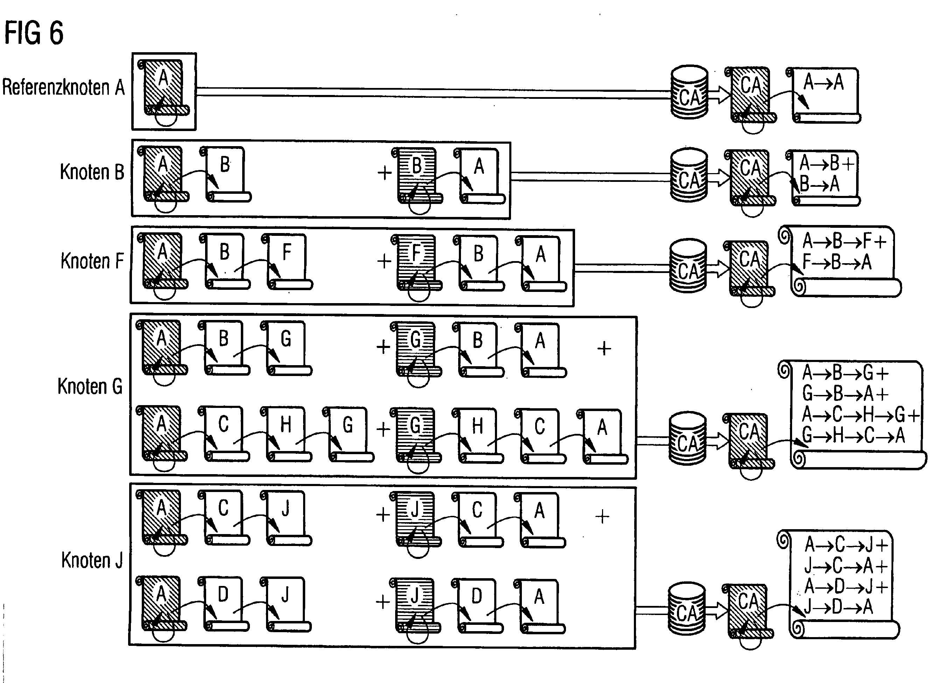

In Figur 6 ist daher eine erfindungsgemäße Verfahrensweise präsentiert, die zur Lösung dieses Problems als ein Kernelement einen vertrauenswürdigen, zentralen Zertifizierungsserver (CA) vorsieht. Dieser erhält Zertifikatsketten von den Knoten A...J, verifiziert diese, und bei positivem Ergebnis erstellt er für den jeweiligen Knoten ein Zertifikat, welches die gleiche Information wie die Zertifikatskette enthält.

Beispielsweise sendet der fünfte Knoten F seine Zertifikatskette A-B-F an den zentralen Zertifizierungsserver CA. Dieser prüft die Gültigkeit der Zertifikate vom ersten Knoten A, vom zweiten Knoten B und dem sechsten Knoten F.

Fällt die Überprüfung positiv aus, so erstellt der zentrale Zertifizierungsserver CA ein elftes Zertifikat F'(CA: A-B-F) für den sechsten Knoten F, welches folgende Informationen enthält:
1. Der erste Knoten A behauptet, einen ersten Schlüssel K(A) zu besitzen
2. Der erste Knoten A bestätigt, dass der zweite Knoten B einen zweiten Schlüssel K(B) besitzt
3. Der zweite Knoten B bestätigt, dass der sechste Knoten F einen dritten Schlüssel K(F) besitzt

Der zentrale Zertifizierungsserver CA prüft dabei keine Identitäten, sondern bestätigt lediglich Identitätsaussagen, die von den Knoten A...J gemacht werden. Diese Lösung ist daher auch nicht sicherer als die Lösung ohne zentralen Zertifizierungsserver CA, es wird lediglich die Anzahl der zu prüfenden Zertifikate beim Kontakt zweier Teilnehmer deutlich reduziert, nämlich auf ein einziges. Das CA-Rootzertifikat ist vertrauenswürdig, da es z.B. mit der Anwendungssoftware zusammen ausgeliefert wird.

Voraussetzung für diese Lösung ist, dass die Rootzertifikate der zentralen Zertifizierungsserver CA(s) in sicherer und authentischer Weise im ganzen Netzwerk verteilt werden können.

Erfindungsgemäß bieten sich für dieses Verfahren eine Fülle von vorteilhaften Variations- und Optimierungsmöglichkeiten, von denen die wichtigsten im Folgenden anhand der Darstellung erläutert werden sollen:

Besitzt ein Knoten mehrere Zertifikatsketten, so werden diese vom zentralen Zertifizierungsserver CA vorzugsweise in ein einziges Zertifikat überführt, wie in Figur 6 für den siebten Knoten G und den neunten Knoten J dargestellt.

Die Zertifikatsketten eines Knotens können dabei auch von verschiedenen Referenzknoten ausgehen. Beispielsweise können die Ketten A-D-J, A-C-J und E-D-J alle in ein einziges Zertifikat (CA: A-D-J, A-C-J, E-D-J) für den neunten Knoten J überführt werden.

Der zentrale Zertifizierungsserver CA kann so administriert werden, dass nur bestimmte, vorzugsweise besonders vertrauenswürdige Knoten als Referenzknoten zugelassen sind. Ketten, die an anderen, unbekannten Referenzknoten beginnen, werden dann verworfen. Es können natürlich auch mehrere zentrale Zertifizierungsserver CA mit unterschiedlichen Rootzertifikaten verwendet werden.

Auch die selbstsignierten Rootzertifikate der Referenzknoten können vom zentralen Zertifizierungsserver CA bestätigt werden. Allerdings ist dies nicht im Sinne eine PKI-Lösung zu verstehen, da der Zertifizierungsserver die Identität der Referenzknoten nicht prüft.

Erhält ein Knoten A...B, der bereits ein Zertifikat vom zentralen Zertifizierungsserver CA besitzt, eine neue Zertifikatskette, so kann er diese zusammen mit seinem bereits vorhandenen CA-Zertifikat an den zentralen Zertifizierungsserver CA senden und die neue Kette in das Zertifikat einbauen lassen.

Anstelle der vollständigen Kette bis zum Referenzknoten A, E kann auch vorzugsweise das Zertifikat vom zentralen Zertifizierungsserver CA an den nächsten Knoten in der Hierarchie weitergegeben werden. Beispielsweise sei angenommen, der achte Knoten H würde dann nicht die Kette A-C-H-G an den siebten Knoten G senden, sondern nur sein CA-Zertifikat H'(CA: A-C-H) sowie das von ihm erstellte Zertifikat für den siebten Knoten G.

Ebenso ist es möglich, dass ein Knoten A...B für die nächsten Knoten in der Hierarchie die Zertifikate direkt vom zentralen Zertifizierungsserver CA erstellen lässt. Dazu sendet z.B. der zweite Knoten B sein CA-Zertifikat B'(CA: A-B) zusammen mit einer signierten Liste (F, G, H) an den zentralen Zertifizierungsserver CA, welcher dann die Zertifikate F'(CA: A-B-F), G'(CA: A-B-G) sowie H'(CA: A-B-H) erstellt.

Wichtig für die Performance des zentralen Zertifizierungsservers CA ist auch ein Caching von Zertifikaten, speziell derer von Referenzknoten A, E und anderen Knoten A...B weit oben in der Hierarchie. Damit kann die Anzahl der Zertifikate, die der zentrale Zertifizierungsserver CA bei jeder Anfrage überprüfen muss, deutlich reduziert werden.

## Patentansprüche

1. Verfahren zur Sicherung einer Kommunikation zwischen zu einem dezentralen Netzwerk gehörenden Netzknoten, bei dem zur Sicherung von Daten ein ein asymmetrisches Verschlüsselungsverfahren realisierender öffentlicher Schlüssel sowie ein privater Schlüssel zumindest einem Teil der Netzknoten (A...J) verfügbar ist,
wobei eine Zertifizierung der Schlüssel derart erfolgt, dass
a) zumindest ein erster Netzknoten (A, E) der Netzknoten einer obersten ersten Klasse (KLASSE 1, KLASSE 1') zugeordnet wird, wobei der erste Netzknoten (A, E)
a1) als ein erstes Zertifikat (A->A) seinen öffentlichen Schlüssel selbst signiert,
a2) jedem seiner direkt benachbarten zweiten Netzknoten (B...E) jeweils als ein zweites Zertifikat (A->B, A->C, A->D, A->E) dessen öffentlichen Schlüssel signiert,
a3) jeweils das erste Zertifikat (A->A) sowie das jeweilige zweite signierte Zertifikat (A->B, A->C, A->D, A->E) dem jeweiligen direkt benachbarten Netzknoten (B...E) übermittelt,
b) die zweiten Netzknoten (B...E) einer zur obersten Klasse (KLASSE 1, KLASSE 1') nächst niedrigeren zweiten Klasse (KLASSE 2, KLASSE 2') zugeordnet werden, wobei jeder zweite Netzknoten (B...E)
b1) jedem seiner direkt benachbarten Netzknoten (F...J) als ein drittes Zertifikat (B->F, B->G, C->H, C->J, D->J) dessen öffentlichen Schlüssel signiert,
b2) den öffentlichen Schlüssel des Netzknotens der höheren Klasse (KLASSE 1) als ein viertes Zertifikat (B->A) signiert,
b3) das dritte Zertifikat und das vierte Zertifikat (B->A) gemeinsam mit allen von Netzknoten höherer Klassen erhaltenen signierten Zertifikaten dem jeweiligen direkt benachbarten zu höheren Klassen disjunkten Klasse (KLASSE 3, KLASSE 3') zugeordneten Netzknoten übermittelt,
**dadurch gekennzeichnet, dass**
c) die durch die zweiten Netzknoten (B...E) durchgeführte Prozedur für alle Netzknoten einer sich aus den jeweils direkt benachbarten Netzknoten ergebenden nächst niedrigeren Klasse (KLASSE 4') wiederholt wird.

2. Verfahren nach Anspruch 1, **dadurch gekennzeichnet, dass** die Signierungen zumindest teilweise im Rahmen eines initialen Vorgangs erfolgen.

3. Verfahren nach Anspruch 1 oder 2, **dadurch gekennzeichnet, dass** das erste Zertifikat (A->A), zweite Zertifikat (A->B, A->C, A->D, A->E), jedes dritte Zertifikat (B->F, B->G, C->H, C->J, D->J) und/oder jedes vierte Zertifikat (B->A) im Netzknoten gespeichert wird.

4. Verfahren nach einem der vorhergehenden Ansprüche,
**dadurch gekennzeichnet, dass**
a) das erste Zertifikat (A->A), zweite Zertifikate (A-B, A-C, A-D, A-E), die dritten Zertifikate (A-B-F, A-B-G, A-C-H-G, A-C-J, A-D-J) und/oder die vierten Zertifikate (B->A) an zumindest eine zentrale Servereinrichtung (CA) übertragen werden,
b) die zentrale Servereinrichtung (CA) als ein fünftes Zertifikat (CA->CA) ihren öffentlichen Schlüssel selbst signiert,
c) die zentrale Servereinrichtung (CA) jeweils als ein sechstes Zertifikat (CA:A<->A, CA:A<->B, CA:A<->B<->F, CA:A<->B<->G+A<->C<->H<->G) zumindest einen Teil der übertragenen Zertifikate (A->A, A->B, B->A, A->C, C->A, A->D, D->A, A->E, E->A, A->B->F, F->B->A, A->B->G, G->B->A, A->C->H->G, G->H->C->A, A->C->J, J->C->A, A->D->J, J->D->A) signiert.

5. Verfahren nach Anspruch 4, **dadurch gekennzeichnet, dass** seitens der zentralen Servereinrichtung (CA) das Signieren derart erfolgt, dass für den Fall, dass ein Netzknoten (A...B) der zentralen Servereinrichtung (CA) mehrere Zertifikate übermittelt, die zentrale Servereinrichtung (CA) das sechste Zertifikat als die übermittelten Zertifikate zusammenfassendes Zertifikat signiert und an den jeweiligen Netzknoten übermittelt.

6. Verfahren nach dem vorhergehenden Anspruch, **dadurch gekennzeichnet, dass** seitens der zentralen Servereinrichtung (CA) das Signieren derart erfolgt, dass für den Fall, dass ein Netzknoten (A...B) der zentralen Servereinrichtung (CA) mehrere mit dem gleichen ersten Zertifikat beginnenden Zertifikate übermittelt, die zentrale Servereinrichtung (CA) das sechste Zertifikat als die übermittelten Zertifikate zusammenfassendes Zertifikat signiert und an den jeweiligen Netzknoten übermittelt.

7. Verfahren nach dem vorhergehenden Anspruch, **dadurch gekennzeichnet, dass**
a) ein ein sechstes Zertifikat besitzender Netzknoten bei Erhalt eines weiteren ersten Zertifikats, zweiten Zertifikats, dritten oder vierten Zertifikats, das weitere Zertifikat sowie das sechste Zertifikat der zentralen Servereinrichtung (CA) übermittelt,
b) die zentrale Servereinrichtung (CA) als ein aktualisiertes sechstes Zertifikat das weitere Zertifikat sowie das sechste Zertifikat signiert und an den jeweiligen Netzknoten übermittelt.

8. Verfahren nach einem der Ansprüche 4 bis 6, **dadurch gekennzeichnet, dass** eine Zuordnung von ersten Zertifikaten und zentraler Servereinrichtung (CA) derart erfolgt, dass die zentrale Servereinrichtung nur für diejenigen Zertifikate ein sechstes Zertifikat signiert, die mit einem ihr bekannten ersten Zertifikat beginnen.

9. Verfahren nach einem der Ansprüche 4 bis 6, **dadurch gekennzeichnet, dass** mehrere zentrale Servereinrichtungen (CA) betrieben werden, denen erste Zertifikate derart zugeordnet werden, dass den zentralen Servereinrichtungen (CA) zueinander disjunkte erste Zertifikate bekannt sind.

10. Verfahren nach dem vorhergehenden Anspruch, **dadurch gekennzeichnet, dass**
a) jeder zweite Netzknoten (B...E) jedem seiner direkt benachbarten Netzknoten (F...J) als ein drittes Zertifikat (B->F, B->G, C->H, C->J, D->J) dessen öffentlichen Schlüssel signiert,
b) jeder zweite Netzknoten (B...E) das dritte Zertifikat und das sechste Zertifikat zur Übermittlung aller von Netzknoten höherer Klassen erhaltenen signierten Zertifikate dem jeweiligen direkt benachbarten zu höheren Klassen disjunkten Klasse (KLASSE 3, KLASSE 3') zugeordneten Netzknoten übermittelt,
c) der jeweilige direkt benachbarte Netzknoten den öffentlichen Schlüssel des zweiten Netzknotens (B...E) der höheren Klasse (KLASSE 2) als ein viertes Zertifikat (F->B) signiert.

11. Verfahren nach dem vorhergehenden Anspruch, **dadurch gekennzeichnet, dass** das Signieren des ersten Zertifikates, des zweiten Zertifikates, des dritten Zertifikates und des vierten Zertifikates durch die zentrale Servereinrichtung (CA) erfolgt.

12. Netzknoten, **gekennzeichnet durch** Mittel zur Durchführung aller Schritte jedes Netzknotens des Verfahrens nach einem der vorhergehenden Ansprüche.

13. Netzwerksystem, umfassend mehrere Netzknoten nach Anspruch 12 und eine zentrale Servereinrichtung (CA), **gekennzeichnet durch** Mittel zur Durchführung aller Schritte des Verfahrens nach einem der Ansprüche 4 bis 11.

## Claims

1. Method for securing a communication between network nodes belonging to a decentralised network, in which to secure data, a public key implementing an asymmetrical encryption process and a private key is available to at least some of the network nodes (A...J),
whereby a certification of the keys occurs in such a way that
a) at least a first network node (A, E) is allocated to the network nodes of a highest first class (CLASS 1, CLASS 1'), whereby the first network node (A, E)
a1) itself signs its public key as a first certificate (A->A),
a2) signs the public keys of each of its immediately adjacent second network nodes (B...E) in each case as a second certificate (A->B, A->C, A->D, A->E),
a3) transmits in each case the first certificate (A->A) and the second signed certificate in each case (A->B, A->C, A->D, A->E) to the relevant directly adjacent network node (B...E),
b) the second network nodes (B... E) are allocated to a second class (CLASS 2, CLASS 2') immediately below the highest class (CLASS 1, CLASS 1') whereby every second network (B...E),
b1)signs for each of its immediately adjacent second network nodes (F...J) their public keys as a third certificate (B->F, B->G, C->H, C->J, D->J),
b2) signs the public key of the network node of the higher class (CLASS 1) as a fourth certificate (B->A),
b3) transmits the third certificate and the fourth certificate (B->A) together with all signed certificates received from network nodes of higher classes to the relevant directly adjacent class (CLASS 3, CLASS 3') disjoint to higher classes, **characterised in that**
c) the procedure carried out by the second network nodes (B...E) is repeated for all network nodes of a next lower class (CLASS 4') arising from the in each case directly adjacent network node.

2. Method according to claim 1, **characterised in that** the signings occur at least partially in the context of an initial procedure.

3. Method according to claim 1 or 2, **characterised in that** the first certificate (A->A), second certificate (A->B, A->C, A->D, A->E), each third certificate (B->F, B->G, C->H, C->J, D->J) and / or each fourth certificate (B->A) is saved in the network node.

4. Method according to any one of the previous claims **characterised in that**
a) the first certificate (A->A), second certificates (A-B, A-C, A-D, A-E), the third certificates (A-B-F, A-B-G, A-C-H-G, A-C-J, A-D-J) and / or the fourth certificates (B->A) are transferred to at least one central server device (CA),
b) the central server device (CA) itself signs its public key as a fifth certificate (CA->CA),
c) the central server device (CA) signs at least some of the certificates transferred (A->A, A->B, B->A, A->C, C->A, A->D, D->A, A->E, E->A, A->B->F, F->B->A, A->B->G, G->B->A, A->C->H->G, G->H->C->A, A->C->J, J->C->A, A->D->J, J->D->A) in each case as a sixth certificate (CA: A<->A, CA: A<->B, CA: A<->B<->F, CA: A<->B<->G+A<->C<->H<->G).

5. Method according to claim 4, **characterised in that** the signing by the central server device (CA) occurs such that in the event that a network node (A...B) transmits a number of certificates to the central server device (CA), the central server device (CA) signs the sixth certificate as the certificate combining the transmitted certificates and transmits it to the relevant network node.

6. Method according to claim 5, **characterised in that** the signing by the central server device (CA) occurs such that in the event that a network node (A...B) transmits a number of certificates beginning with the same first certificate to the central server device (CA), the central server device (CA) signs the sixth certificate as the certificate combining the transmitted certificates and transmits it to the relevant network node.

7. Method according to the claim 6 **characterised in that**
a) upon receiving a further first certificate, second certificate, third or fourth certificate, a network node which has a sixth certificate transmits the additional certificate and the sixth certificate to the central server device (CA),
b) the central server device (CA) signs the additional certificate and the sixth certificate as an updated sixth certificate and transmits them to the relevant network nodes.

8. Method according to any one of claims 4 to 6 **characterised in that** an allocation of first certificates and central server device (CA) occurs in such a way that the central server device signs a sixth certificate only for those certificates which start with a first certificate known to it.

9. Method according to any one of claims 4 to 6 **characterised in that** a number of central server devices (CA) are operated to which first certificates are allocated in such a way that reciprocally disjoint first certificates are known to the central server devices (CA).

10. Method according to the claim 9 **characterised in that**
a) every second network node (B...E) signs the public keys of each of its immediately adjacent network nodes (F...J) as a third certificate (B->F, B->G, C->H, C->J, D->J)
b) every second network node (B...E) transmits the third certificate and the sixth certificate for the transmission of all signed certificates received from network nodes of higher classes to the relevant directly adjacent network nodes allocated to the relevant class (CLASS 3, CLASS 3') disjoint to higher classes,
c) the particular directly adjacent network node signs the public key of the second network node (B...E) of the higher class (CLASS 2) as a fourth certificate (F->B).

11. Method according to claim 10 **characterised in that** the signing of the first certificate, the second certificate, the third certificate and the fourth certificate is carried out by the central server device (CA).

12. Network nodes **characterised by** means to carry out all the steps of each network node of the method according to any one of the previous claims.

13. Network system, including a number of network nodes according to claim 12 and a central server device (CA), **characterised by** means to carry out all the steps of the method according to any one of claims 4 to 11.

## Revendications

1. Procédé servant à sécuriser une communication entre des noeuds de réseau faisant partie d'un réseau décentralisé, dans le cadre duquel pour la sécurisation de données, une clé publique effectuant un procédé de chiffrement asymétrique ainsi qu'une clé privée sont disponibles pour au moins une partie des noeuds de réseau (A...J),
sachant qu'une certification des clés est effectuée de telle manière
a) qu'au moins un premier noeud de réseau (A, E) des noeuds de réseau est attribué à une première classe supérieure (CLASSE 1, CLASSE 1'), sachant que le premier noeud (A, E)
a1) signe lui-même comme un premier certificat (A->A) sa clé publique,
a2) signe pour chacun de ses deuxièmes noeuds de réseau (B...E) situés directement à proximité respectivement comme un deuxième certificat (A->B, A->C, A->D, A->E) sa clé publique
a3) transmet respectivement le premier certificat (A->A) ainsi que le deuxième certificat (A->B, A->C, A->D, A->E) respectif signé au noeud de réseau respectif situé directement à proximité (B...E),
b) que les deuxièmes noeuds de réseau (B...E) sont attribués à une deuxième classe (CLASSE 2, CLASSE 2') située juste en dessous de la classe supérieure (CLASSE 1, CLASSE 1'), sachant que chaque deuxième noeud de réseau (B...E)
b1) signe pour chacun de ses noeuds de réseau (F...J) situés directement à proximité, comme un troisième certificat (B->F, B->G, C->H, C->J, D->J), sa clé publique,
b2) signe la clé publique du noeud de réseau de la classe supérieure (CLASSE 1) comme un quatrième certificat (B->A),
b3) transmet le troisième certificat et le quatrième certificat (B->A) conjointement avec tous les certificats signés obtenus des noeuds de réseau des classes supérieures, au noeud de réseau respectif situé directement à proximité, attribué aux classes disjointes (CLASSE 3, CLASSE 3') par rapport à des classes supérieures,
**caractérisé en ce que**
c) la procédure effectuée par les deuxièmes noeuds de réseau (B...E) est répétée pour tous les noeuds de réseau d'une classe directement inférieure (CLASSE 4') résultant des noeuds de réseau respectifs situés directement à proximité.

2. Procédé selon la revendication 1, **caractérisé en ce que** les signatures se font au moins en partie dans le cadre d'un processus initial.

3. Procédé selon la revendication 1 ou 2, **caractérisé en ce que** le premier certificat (A->A), le deuxième certificat (A->B, A->C, A->D, A->E), chaque troisième certificat (B->F, B->G, C->H, C->J, D->J) et/ou chaque quatrième certificat (B->A) sont stockés dans le noeud de réseau.

4. Procédé selon l'une quelconque des revendications précédentes,
**caractérisé en ce que**
a) le premier certificat (A->A), le deuxième certificat (A-B, A-C, A-D, A-E), les troisièmes certificats (A-B-F, A-B-G, A-C-H-G, A-C-J, A-D-J) et/ou les quatrièmes certificats (B->A) sont transmis à au moins un dispositif de serveur central (CA),
b) le dispositif de serveur central (CA) signe lui-même comme un cinquième certificat (CA->CA) sa clé publique,
c) le dispositif de serveur central (CA) signe respectivement en tant qu'un sixième certificat (CA : A<->A, CA : A<->B, CA : A<->B<->F, CA : A<->B<->G+A<->C<->H<->G) au moins une partie des certificats transmis (A->A, A->B, B->A, A->C, C->A, A->D, D->A, A->E, E->A, A->B->F, F->B->A, A->B->G, G->B->A, A->C->H->G, G->H->C->A, A->C->J, J->C->A, A->D->J, J->D->A).

5. Procédé selon la revendication 4, **caractérisé en ce que** la signature a lieu du côté du dispositif de serveur central (CA) de telle manière que si un noeud de réseau (A...B) transmet au dispositif de serveur central (CA) plusieurs certificats, le dispositif de serveur central (CA) signe le sixième certificat comme certificat regroupant les certificats transmis, et le transmet au noeud de réseau respectif.

6. Procédé selon la revendication précédente, **caractérisé en ce que** la signature est effectuée du côté du dispositif de serveur central (CA) de telle manière que, si un noeud de réseau (A...B) transmet au dispositif de serveur central (CA) plusieurs certificats commençant par le même premier certificat, le dispositif de serveur central (CA) signe le sixième certificat en tant que certificat regroupant les certificats transmis et le transmet au noeud de réseau respectif.

7. Procédé selon la revendication précédente, **caractérisé en ce que**
a) un noeud de réseau détenant un sixième certificat transmet, à réception d'un premier certificat supplémentaire, d'un deuxième certificat, d'un troisième ou quatrième certificat, le certificat supplémentaire ainsi que le sixième certificat au dispositif de serveur central (CA),
b) le dispositif de serveur central (CA) signe de manière électronique en tant qu'un sixième certificat mis à jour, le certificat supplémentaire ainsi que le sixième certificat et les transmet au noeud de réseau respectif.

8. Procédé selon l'une quelconque des revendications 4 à 6, **caractérisé en ce qu'**une attribution des premiers certificats au dispositif de serveur central (CA) est effectuée de telle manière que le dispositif de serveur central (CA) signe un sixième certificat uniquement pour les certificats qui commencent par un premier certificat qu'il connaît.

9. Procédé selon l'une quelconque des revendications 4 à 6, **caractérisé en ce que** plusieurs dispositifs de serveur centraux (CA) sont opérés, auxquels sont attribués des premiers certificats de telle manière que des premiers certificats disjoints les uns par rapport aux autres sont connus des dispositifs de serveur centraux (CA).

10. Procédé selon la revendication précédente, **caractérisé en ce que**
a) chaque deuxième noeud de réseau (B...E) signe pour chacun de ses noeuds de réseau (F...J) situés directement à proximité en tant qu'un troisième certificat (B->F, B->G, C->H, C->J, D->J) sa clé publique,
b) chaque deuxième noeud de réseau (B...E) transmet le troisième certificat et le sixième certificat aux fins de la transmission de tous les certificats signés obtenus des noeuds de réseau des classes supérieures, au noeud de réseau respectif situé directement à proximité, attribué aux classes disjointes (CLASSE 3, CLASSE 3') par rapport à des classes supérieures,
c) le noeud de réseau respectif situé directement à proximité signe la clé publique du deuxième noeud de réseau (B...E) de la classe supérieure (CLASSE 2) comme un quatrième certificat (F->B).

11. Procédé selon la revendication précédente, **caractérisé en ce que** la signature du premier certificat, du deuxième certificat, du troisième certificat et du quatrième certificat est effectuée par l'intermédiaire du dispositif de serveur central (CA).

12. Noeud de réseau, **caractérisé par** des moyens servant à mettre en oeuvre toutes les étapes de chaque noeud de réseau du procédé selon l'une quelconque des revendications précédentes.

13. Système de réseau, comportant plusieurs noeuds de réseau selon la revendication 12 et un dispositif de serveur central (CA), **caractérisé par** des moyens servant à mettre en oeuvre toutes les étapes du procédé selon l'une quelconque des revendications 4 à 11.
